# EUROPÄISCHE PATENTSCHRIFT

(11) **EP 1 216 825 B1**
(45) Veröffentlichungstag und Bekanntmachung des Hinweises auf die Patenterteilung: **27.06.2007**
(21) Anmeldenummer: 01125583.3
(22) Anmeldetag: 26.10.2001
(51) Int. Cl.: B32B 27/34

(54) **Polyamid-Mehrschichtverbund**
Polyamide-comprising laminate
Produit laminé comprenant une résine polyamide

(30) Priorität: 21.12.2000 DE 10064334
(43) Veröffentlichungstag der Anmeldung: 26.06.2002
(73) Patentinhaber: Degussa GmbH, 40474 Düsseldorf (DE)
(72) Erfinder: Schmitz, Guido, Dr., 48249 Dülmen (DE); Häger, Harald, Dr., 45665 Recklinghausen (DE); Ries, Hans, Dr., 45772 Marl (DE)

(56) Entgegenhaltungen:
- EP-A- 0 435 787
- EP-A- 0 464 271
- EP-A- 0 735 098
- EP-A- 1 031 411
- WO-A-99/46333
- US-A- 5 404 915
- US-A- 5 869 190

## Beschreibung

Gegenstand der Erfindung ist ein Mehrschichtverbund, der eine Schicht aus einem speziellen Polyamidblend enthält.

Bei der Entwicklung von Mehrschichtverbunden, die zum Beispiel als Rohr zur Führung flüssiger oder gasförmiger Medien in Kraftfahrzeugen eingesetzt werden, müssen die verwendeten Formmassen eine ausreichende chemische Beständigkeit gegenüber den zu führenden Medien aufweisen, und sie müssen allen an sie gestellten mechanischen Anforderungen auch nach langfristiger Beanspruchung durch Kraftstoffe, Öle oder Temperatureinwirkung gewachsen sein. In der Praxis haben sich hier Formmassen auf Basis von Polyamid bewährt. Der Mehrschichtverbund unterliegt jedoch nicht nur den Einwirkungen des zu führenden Mediums, sondern auch Einwirkungen, die von außen kommen; bei Rohren, die im Unterbodenbereich von Kraftfahrzeugen verlegt sind, sind das beispielsweise die Einwirkung von Luftfeuchtigkeit, Spritzwasser, Auftausalzen, Unterbodenschutz, Fetten und Ölen. Aus diesem Grunde kommen als Materialien für derartige Rohre nur Polyamidformmassen auf Basis von PA11, PA12, PA612, PA1012 bzw. PA1212 in Frage. Andere Polyamide wie z.B. PA6, PA66 oder PA6/66 würden zwar den Beanspruchungen durch das zu fördernde Medium gewachsen sein und wären zudem preisgünstig, sie sind jedoch weniger schlagzäh und weisen eine hohe Wasseraufnahme auf, verbunden mit Quellung und damit nicht tolerierbaren Dimensionsänderungen. Darüber hinaus ist PA6 nicht ausreichend zinkchloridbeständig. Somit darf zumindest die Außenschicht nicht aus derartigen Polyamiden bestehen.

Die EP-A-1 031 411 beschreibt, dass in einem Mehrschichtverbund mit einer Schicht aus einer Polyamidformmasse und einer Schicht aus einer Polyesterformmasse beide Schichten durch einen Haftvermittler verbunden werden können, der ein bestimmtes Polyamid und einen bestimmten Polyester enthält. In der WO 99/46333 wird ein Mehrschichtverbund beschrieben, der eine Schicht aus einer Polyamidformmasse enthält, die auf Basis einer Mischung aus zwei verschiedenen Copolyamiden zusammengesetzt ist. Die EP-A-0 735 098 beschreibt einen hohlen Gegenstand, bei dem zwei geformte Teile mittels einer Zusammensetzung verbunden werden, die ein PA6/66-Copolymer enthält.

In der DE 40 06 870 C1 wird eine Kraftstoffleitung für Kraftfahrzeuge beschrieben, die aus mindestens drei Schichten aus mindestens zwei verschiedenen, miteinander verträglichen Polyamiden bestehen soll. Diese Schrift lehrt, dass verschiedene Polyamide ein unterschiedliches Diffusionsprofil für die einzelnen Kraftstoffkomponenten besitzen und somit durch die Kombination verschiedener Polyamidschichten die Permeation des Kraftstoffs insgesamt verringert werden kann.

In der DE 40 06 870 C1 wird behauptet, dass PA66 mit PA11 oder PA12 so verträglich wäre, dass bei einer Rohrleitung aus solchen Schichten keine Delaminierung beobachtet werden könne. Dies hat sich beim Nacharbeiten nicht bestätigt. Vielmehr hat sich herausgestellt, dass zwei coextrudierte Schichten, von denen die eine aus PA11, PA12, PA612, PA1012 oder PA1212 und die andere aus PA6, PA66 oder PA6/66 besteht, entweder gar nicht aufeinander haften oder dass die Haftung in anderen Fällen bei weitem nicht ausreicht, um einen dauerhaft delaminationsfreien Verbund zu erhalten.

Das Problem fehlender Haftung zwischen Schichten aus unterschiedlichen Polyamiden wird in der EP-A-0 731 308 erkannt. Dort wird beispielsweise ein durch Coextrusion hergestelltes Mehrschichtrohr beschrieben, bei dem eine Außenschicht aus einer PA11-Formmasse und eine Innenschicht, die in erster Linie aus PA6 besteht, durch einen Haftvermittler auf Polyolefinbasis verbunden werden.

Seit einiger Zeit werden jedoch von seiten der Automobilindustrie Forderungen nach einer erhöhten Beständigkeit bei höherer Temperatur gestellt. Damit scheiden Lösungen, die eine Polyolefinschicht beinhalten, wegen deren niedriger Wärmeformbeständigkeit aus.

Darüber hinaus hat sich gezeigt, dass bei längerem Kontakt mit alkoholhaltigem Kraftstoff, insbesondere in der Wärme, die Schichtenhaftung zwischen funktionalisiertem Polyolefin und Polyamid zusehends geringer wird und schließlich auf Werte abfällt, die in der Praxis nicht mehr akzeptabel sind; als Grund hierfür werden Alkoholyse- bzw. Hydrolysereaktionen angesehen.

Schließlich wird in der EP-A-0 464 271 ein Mehrschichtverbund offenbart, der zwei Schichten aus verschiedenen Polyamiden enthält, die durch eine Haftvermittlerschicht miteinander verbunden sind, welche durch Umsetzung dieser beiden Polyamide in der Schmelze bei kurzer Verweilzeit mit Hilfe eines Transamidisierungskatalysators erhalten wurde. Dem Fachmann ist bewusst, dass es sich hierbei um ein nur sehr unvollständig abreagiertes und wegen der Anwesenheit des Katalysators um ein lebendes System handelt.

Es war Aufgabe der vorliegenden Erfindung, einen Mehrschichtverbund auf Polyamidbasis bereitzustellen, bei dem alle Schichten eine ausreichende Wärmeformbeständigkeit besitzen.

Eine weitere Aufgabe bestand darin, in einem Mehrschichtverbund eine Schicht aus einem Polyamid, das sich durch besonders gute mechanische Eigenschaften, geringes Wasseraufnahmevermögen und Unempfindlichkeit gegenüber Umwelteinflüssen auszeichnet, mit einer Schicht aus einem preisgünstigeren Polyamid zu kombinieren, ohne hierfür eine Polyolefinschicht als Haftvermittler zu verwenden.

Darüber hinaus sollten in einem Mehrschichtverbund auf Polyamidbasis zwei Polyamidschichten miteinander kombiniert werden, die für die verschiedenen Bestandteile eines Kraftstoff- oder Lösemittelgemisches eine jeweils unterschiedliche Sperrwirkung besitzen, wobei diese Polyamidschichten über einen geeigneten Haftvermittler fest miteinander verbunden sein sollten.

Schließlich sollte ein Mehrschichtverbund auf Polyamidbasis bereitgestellt werden, dessen Schichtenhaftung auch bei längerem Kontakt mit alkoholhaltigen oder wässrigen Medien in der Wärme weitestgehend erhalten bleibt.

Diese Aufgaben werden durch einen Mehrschichtverbund gelöst, der folgende Schicht enthält:
I. Eine Schicht I aus einer Formmasse, die folgende Komponenten enthält:
   a) 0 bis 80 Gew.-Teile eines Polyamids, ausgewählt aus PA6, PA66, PA6/66 und Mischungen hiervon,
   c) 0 bis 80 Gew.-Teile eines Polyamids, ausgewählt aus PA11, PA12, PA612, PA1012, PA1212 und Mischungen hiervon,
   dadurch gekennzeichnet, dass die Haftung dieser Schicht verbessert wird durch eine Maßnahme, die ausgewählt ist aus der Gruppe
A. Gleichzeitige Anwesenheit der folgenden Komponente:
   b) 0,5 bis 100 Gew.-Teile eines Polyamin-Polyamid-Copolymers, das unter Verwendung folgender Monomerer hergestellt wird:
      α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
      β) polyamidbildende Monomere, ausgewählt aus Lactamen, w-Aminocarbonsäuren und/oder äquimolaren Kombinationen von Diamin und Dicarbonsäure und
B. Verknüpfung der Komponenten gemäß a) und c) durch Zugabe einer reaktiven Verbindung.
   wobei die Summe der Gewichtsteile der Komponenten gemäß a), c) und gegebenenfalls b) 100 beträgt und wobei zusätzlich
   - in der Summe der Komponenten a) und b) mindestens 20 Gew.-Teile aus Monomereinheiten bestehen, die sich von Caprolactam und/oder der Kombination Hexamethylendiamin/Adipinsäure herleiten und
   - in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten.

   Von der Komponente gemäß a) sind in der Formmasse der Schicht I bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.
   Von der Komponente gemäß b) sind in der Formmasse der Schicht I gegebenenfalls mindestens 0,5 Gew.-Teile, bevorzugt mindestens 2 Gew.-Teile, besonders bevorzugt mindestens 5 Gew.-Teile und ganz besonders bevorzugt mindestens 10 Gew.-Teile enthalten, während die Obergrenze bevorzugt bei 80 Gew.-Teilen, besonders bevorzugt bei 60 Gew.-Teilen und insbesondere bevorzugt bei 40 Gew.-Teilen liegt. Entsprechende Formmassen sind ebenfalls Gegenstand der Erfindung.
   Von der Komponente gemäß c) sind in der Formmasse der Schicht I bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.
   In einer bevorzugten ersten Ausführungsform enthält der Mehrschichtverbund neben der Schicht I mindestens
II. Eine Schicht II aus einer Formmasse auf Basis von PA11, PA12, PA612, PA1012 und/oder PA1212.
   In einer bevorzugten zweiten Ausführungsform schließt sich an die Schicht I noch folgende Schicht an:
III. Eine Schicht III aus einer Formmasse auf Basis von PA6, PA66 und/oder PA6/66,
   wobei der Verbund beispielsweise die Schichtenabfolge I/III oder II/I/III besitzt. In diesem Fall wird bei Anwendungen, bei denen zwischen Außenschicht und Innenschicht unterschieden wird, die Außenschicht bevorzugt von I bzw. II gebildet.

In einer bevorzugten dritten Ausführungsform ist der Mehrschichtverbund symmetrisch aufgebaut und weist beispielsweise die Schichtenfolge II/I/II oder II/I/III/I/II auf.

In einer vierten bevorzugten Ausführungsform ist zumindest eine der Verbundschichten elektrisch leitfähig eingestellt, damit elektrostatische Aufladungen, die durch ein bewegtes Medium hervorgerufen werden, abgeleitet werden. Bevorzugt ist dies die Schicht, die direkt mit dem bewegten Medium im Kontakt steht.

In einer fünften bevorzugten Ausführungsform schließt sich an die Verbundschichten eine weitere, fest haftende Schicht an, die elektrisch leitfähig eingestellt ist.

In einer sechsten bevorzugten Ausführungsform enthält der Mehrschichtverbund zusätzlich eine Regeneratschicht. Bei der Herstellung erfindungsgemäßer Verbunde fällt immer wieder Abfall an, zum Beispiel vom Anfahrvorgang der Extrusionsanlage oder in Form von Butzen beim Extrusionsblasformen oder beim Konfektionieren von Rohren. Eine Regeneratschicht aus diesen Abfällen kann z. B. zwischen der Schicht I und der Schicht II eingebettet sein.

Diese und weitere Ausführungsformen können beliebig miteinander kombiniert werden. In allen diesen Fällen wird eine feste Schichtenhaftung erzielt. Der Mehrschichtverbund kann darüber hinaus, falls erforderlich, noch weitere, hier nicht explizit genannte Schichten enthalten, beispielsweise eine Sperrschicht gegenüber Gasen oder Kraftstoffkomponenten, die nicht aus einem Polyamid zu bestehen braucht. Entsprechende Sperrschichten sind Stand der Technik.

Die Schicht I ist im einfachsten Fall ein Blend aus den Komponenten gemäß a) und c). Da diese Polymeren miteinander unverträglich sind, wird bei der Blendherstellung unter üblichen Verarbeitungstemperaturen, die zu einer physikalischen Mischung führt, nur in einem relativ engen Zusammensetzungsbereich eine ausreichende Haftvermittlerwirkung erzielt. Erfindungsgemäß wird die haftvermittelnde Wirkung durch eine zusätzliche Maßnahme erheblich verbessert. Man geht in einer ersten Ausführungsform von einem zunächst unter üblichen Verarbeitungsbedingungen hergestellten Polyamidblend aus, das anschließend der Festphasennachkondensation unter Bedingungen unterworfen wird, die bei Polyamiden üblich sind. Dies sind in der Regel Temperaturen ab 140 °C bis etwa 5K unterhalb des Kristallitschmelzpunkts Tₘ, bevorzugt Temperaturen ab 150 °C bis etwa 10K unterhalb von Tₘ, mit Reaktionszeiten von 2 bis 48 Stunden, bevorzugt 4 bis 36 Stunden und besonders bevorzugt 6 bis 24 Stunden. Besonders vorteilhaft enthält das eine Polyamid einen Überschuss an Aminoendgruppen und das andere Polyamid einen Überschuss an Carboxylendgruppen. In einer zweiten Ausführungsform wird eine Verknüpfung der Komponenten gemäß a) und c) auch durch Zugabe einer reaktiven Verbindung erzielt, die vorzugsweise die Polyamidendgruppen miteinander verknüpft, beispielsweise eines Bisoxazolins, Biscarbodiimids, Bismaleinimids, Bisanhydrids, Diisocyanats oder der entsprechenden Verbindungen mit drei oder mehr funktionellen Gruppen.

Ein anderer Weg, die Komponenten gemäß a) und c) miteinander verträglich zu machen, ist als dritte Ausführungsform die Zugabe einer wirksamen Menge der Komponente gemäß b).

Die einzelnen Komponenten werden im Folgenden näher erläutert.

PA6 wird durch ringöffnende Polymerisation von Caprolactam hergestellt.

PA66 wird durch Polykondensation von Hexamethylendiamin und Adipinsäure hergestellt. Es ist genauso wie PA6 in einer Vielzahl von Typen handelsüblich.

PA6/66 ist ein Copolykondensat ausgehend von den Monomeren Caprolactam, Hexamethylendiamin und Adipinsäure.

Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE- OS 196 54 058);
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[bis[2-bis(2-aminoethyl)amino]ethyl]amino]ethyl]3,6,9,12,15-pentaazaheptadecan-1,17-diamin (J.M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin-Polyamid-Copolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonderes bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1,4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, dass das Polyamin-Polyamid-Copolymer einen substantiellen Anteil an Aminogruppen besitzt. Vorzugsweise liegt die Aminogruppenkonzentration des Copolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im Folgenden nicht nur Aminoendgruppen, sondern auch gegebenenfalls vorhandene sekundäre bzw. tertiäre Aminfunktionen des Polyamins verstanden.

Beim Polyamin-Polyamid-Copolymer kann die Zusammensetzung des Polyamidanteils in einem sehr weiten Bereich variieren, da die Verträglichkeit mit den Polyamiden der Komponenten gemäß a) und c) offenbar von anderen Faktoren bestimmt wird und in der Regel gegeben ist.

Die Polyamin-Polyamid-Copolymere können nach verschiedenen Verfahren hergestellt werden.

Eine Möglichkeit besteht darin, die polyamidbildenden Monomere und das Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, dass in einem zweistufigen Prozess zuerst gegebenenfalls die Lactamspaltung und die Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das Polyamin-Polyamid-Copolymere gemäß dem Stand der Technik auch in fester Phase nachkondensiert werden.

PA11 wird durch Polykondensation von ω-Aminoundecansäure hergestellt, während PA12 durch ringöffnende Polymerisation von Laurinlactam erhalten wird. Beide Polymere sind in einer Vielzahl von Typen im Handel erhältlich.

PA612 ist durch Polykondensation einer äquivalenten Mischung aus Hexamethylendiamin und 1.12-Dodecandisäure erhältlich. PA1012 wird durch Polykondensation einer äquivalenten Mischung aus 1.10-Decandiamin und 1.12-Dodecandisäure hergestellt, während PA1212 auf gleiche Weise aus 1.12-Dodecandiamin und 1.12-Dodecandisäure erhalten wird.

Mit Vorteil können hier auch Mischungen verschiedener Polyamide eingesetzt werden, z. B. PA12/PA1012 oder PA12/PA1212. Derartige Mischungen zeichnen sich durch eine besonders hohe Tieftemperaturschlagzähigkeit aus; sie sind beispielsweise in der EP-A-0 388 583 beschrieben.

Insbesondere wenn der Mehrschichtverbund als Lebensmittelverpackung eingesetzt werden soll, kann es vorteilhaft sein, bei der Schicht I oder der Schicht II anstelle der Homopolyamide Copolyamide einzusetzen, um durch Absenken des Schmelzpunktes die Schicht heißsiegelfähig zu machen. Geeignete Comonomere stehen dem Fachmann in breiter Auswahl zur Verfügung, beispielsweise Caprolactam, Laurinlactam oder die äquimolare Kombination eines C₆-C₁₂-Diamins mit einer C₆-C₁₂-Dicarbonsäure.

Die eingesetzten Polyamidformmassen können maximal etwa 50 Gew.-% Zusatzstoffe enthalten, die ausgewählt sind aus schlagzähmachendem Kautschuk und/oder üblichen Hilfs- bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben können die Formmassen noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthalten die Formmassen 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Beim erfindungsgemäßen Mehrschichtverbund handelt es sich in einer Ausführungsform um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke solcher Mehrschichtverbunde sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter.

Der erfindungsgemäße Mehrschichtverbund kann auch als flächiger Verbund vorliegen, beispielsweise als Folie, etwa als Verpackungsfolie für Lebensmittel.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square. Die Meßmethode zur Bestimmung des Widerstands von mehrschichtigen Rohren ist in der SAE J 2260 (November 1996, Paragraph 7.9) erläutert.

Bei der Ausführung des erfindungsgemäßen Mehrschichtverbundes als Hohlkörper oder Hohlprofil (z. B. Rohr) kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weichgemachtes PVC, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5 554 425 beschrieben.

Gegenstand der Erfindung ist auch die Verwendung einer Formmasse als Haftvermittlerschicht in einem Mehrschichtverbund gemäß Anspruch 35.

Die Erfindung wird im Folgenden beispielhaft erläutert.

In den Beispielen wurden folgende Komponenten bzw. Formmassen verwendet:

| | |
|---|---|
| VESTAMID^{®} X7293, | eine weichgemachte und schlagzähmodifizierte Extrusionsformmasse auf Basis von PA 12 der Degussa AG, Düsseldorf |
| VESTANMID^{®} ZA7295, | eine Extrusionsformmasse aus PA12 der Degussa AG, Düsseldorf |
| ULTRAMID^{®} B4, | ein PA6 der BASF AG, Ludwigshafen |
| ULTRAMID^{®} B5W, | ein PA6 der BASF AG, Ludwigshafen |
| VESTAMID^{®} D22, | ein hochviskoses PA612 der Degussa AG, Düsseldorf |

### Polyethylenimin-PA6-Copolymer:

4,78 kg Caprolactam wurden in einem Aufheizkessel bei 180 bis 210 °C aufgeschmolzen und in einen druckfesten Polykondensationskessel überführt. Dann wurden 250 ml Wasser und 57 ppm Hypophosphorige Säure zugegeben. Die Caprolactamspaltung wurde bei 280 °C unter dem sich einstellenden Eigendruck durchgeführt. Anschließend wurde innerhalb von 3 h auf einen Restwasserdampfdruck von 3 bar entspannt und 230 g Polyethylenimin (LUPASOL^{®} G 100, BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert. Das erhaltene Copolymer hatte einen Polyethyleniminanteil von 4,5 Gew.-% und einen PA6-Anteil von 95,5 Gew.-%.

### Beispiel 1:

Mit Hilfe eines Doppelschneckenextruders Berstorff ZE 25 wurde bei 280 °C eine innige Mischung aus 6,1 kg VESTAMID^{®} D22, 9,0 kg ULTRAMID^{®} B5W und 2,0 kg des Polyethylenimin-PA6-Copolymers hergestellt, als Strang extrudiert, granuliert und getrocknet.

Unter Verwendung dieser Mischung wurde ein Dreischichtrohr mit einem Außendurchmesser von 8 mm und einer Gesamtwandstärke von 1 mm mittels Coextrusion hergestellt. Die Außenschicht dieses Rohres bestand aus VESTAMID^{®} D22, die Zwischenschicht aus der anfangs hergestellten Mischung und die Innenschicht aus ULTRAMID^{®} B4. An beiden Phasengrenzflächen wurde hierbei eine untrennbare Haftung erzielt.

### Beispiel 2:

Mit Hilfe eines Doppelschneckenextruders Berstorff ZE 25 wurde bei 320 °C eine innige Mischung aus 8,1 kg VESTAMID^{®} ZA 7295 und 9,0 kg ULTRAMID^{®} B4 hergestellt, als Strang extrudiert, granuliert und getrocknet. Hierbei wurden in gewissem Ausmaß Umamidierungsreaktionen festgestellt, die zu Blockcopolymeren führten.

Unter Verwendung dieser Mischung wurde ein Dreischichtrohr mit einem Außendurchmesser von 8 mm und einer Gesamtwandstärke von 1 mm mittels Coextrusion hergestellt. Die Außenschicht dieses Rohres bestand aus VESTAMID^{®} X7293, die Zwischenschicht aus der anfangs hergestellten Mischung und die Innenschicht aus ULTRAMID^{®} B4. An beiden Phasengrenzflächen wurde hierbei eine untrennbare Haftung erzielt.

## Patentansprüche

1. Mehrschichtverbund, der folgende Schicht enthält:
I. Eine Schicht I aus einer Formmasse, die folgende Komponenten enthält:
a) 0 bis 80 Gew.-Teile eines Polyamids, ausgewählt aus PA6, PA66, PA6/66 und Mischungen hiervon,
c) 0 bis 80 Gew.-Teile eines Polyamids, ausgewählt aus PA11, PA12, PA612, PA1012, PA1212 und Mischungen hiervon,
**dadurch gekennzeichnet, dass** die Haftung dieser Schicht verbessert wird durch eine Maßnahme, die ausgewählt ist aus der Gruppe
A. Gleichzeitige Anwesenheit der folgenden Komponente:
b) 0,5 bis 100 Gew.-Teile eines Polyamin-Polyamid-Copolymers, das unter Verwendung folgender Monomerer hergestellt wird.
α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
β) polyamidbildende Monomere, ausgewählt aus Lactamen, ω-Aminocarbonsäuren und/oder äquimolaren Kombinationen von Diamin und Dicarbonsäure und
B. Verknüpfung der Komponenten gemäß a) und c) durch Zugabe einer reaktiven Verbindung,
wobei die Summe der Gewichtsteile der Komponenten gemäß a), c) und gegebenenfalls b) 100 beträgt und wobei zusätzlich
- in der Summe der Komponenten a) und b) mindestens 20 Gew.-Teile aus Monomereinheiten bestehen, die sich von Caprolactam und/oder der Kombination Hexamethylendiamin/Adipinsäure herleiten und
- in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten.

2. Mehrschichtverbund gemäß Anspruch 1,
**dadurch gekennzeichnet,**
**dass** die Formmasse der Schicht I enthält:
- mindestens 0,5 Gew.-Teile der Komponente gemäß a) und/oder
- mindestens 0,5 Gew.-Teile der Komponente gemäß c).

3. Mehrschichtverbund gemäß einem der vorhergehenden Ansprüche,
**dadurch gekennzeichnet,**
**dass** die Formmasse der Schicht I enthält:
- mindestens 10 Gew.-Teile der Komponente gemäß a)
und/oder
- mindestens 2 Gew.-Teile der Komponente gemäß b)
und/oder
- mindestens 10 Gew.Teile der Komponente gemäß c).

4. Mehrschichtverbund gemäß einem der vorhergehenden Ansprüche,
**dadurch gekennzeichnet,**
**dass** die Formmasse der Schicht I enthält:
- mindestens 20 Gew.-Teile der Komponente gemäß a)
und/oder
- mindestens 5 Gew.-Teile der Komponente gemäß b)
und/oder
- mindestens 20 Gew.-Teile der Komponente gemäß c).

5. Mehrschichtverbund gemäß einem der vorhergehenden Ansprüche,
**dadurch gekennzeichnet,**
**dass** die Formmasse der Schicht I enthält:
- mindestens 30 Gew.-Teile der Komponente gemäß a)
und/oder
- mindestens 10 Gew.-Teile der Komponente gemäß b)
und/oder
- mindestens 30 Gew.-Teile der Komponente gemäß c).

6. Mehrschichtverbund gemäß einem der vorhergehenden Ansprüche,
**dadurch gekennzeichnet,**
**dass** die Formmasse der Schicht I enthält:
- maximal 70 Gew.-Teile der Komponente gemäß a)
oder
- maximal 80 Gew.-Teile der Komponente gemäß b)
oder
- maximal 70 Gew.-Teile der Komponente gemäß c).

7. Mehrschichtverbund gemäß einem der vorhergehenden Ansprüche,
**dadurch gekennzeichnet,**
**dass** die Formmasse der Schicht I enthält:
- maximal 60 Gew.-Teile der Komponente gemäß a)
oder
- maximal 60 Gew.-Teile der Komponente gemäß b)
oder
- maximal 60 Gew.-Teile der Komponente gemäß c).

8. Mehrschichtverbund gemäß einem der vorhergehenden Ansprüche,
**dadurch gekennzeichnet,**
**dass** die Formmasse der Schicht I maximal 40 Gew.-Teile der Komponente gemäß b) enthält.

9. Mehrschichtverbund gemäß einem der vorhergehenden Ansprüche,
**dadurch gekennzeichnet,**
**dass** das Polyamin-Polyamid-Copolymer unter Verwendung von 1 bis 20 Gew.-% des Polyamins hergestellt wird.

10. Mehrschichtverbund gemäß einem der vorhergehenden Ansprüche,
**dadurch gekennzeichnet,**
**dass** das Polyamin-Polyamid-Copolymer unter Verwendung von 1,5 bis 16 Gew.-% des Polyamins hergestellt wird.

11. Mehrschichtverbund gemäß einem der vorhergehenden Ansprüche,
**dadurch gekennzeichnet,**
**dass** das Polyamin mindestens 8 Stickstoffatome enthält.

12. Mehrschichtverbund gemäß einem der vorhergehenden Ansprüche,
**dadurch gekennzeichnet,**
**dass** das Polyamin mindestens 11 Stickstoffatome enthält.

13. Mehrschichtverbund gemäß einem der vorhergehenden Ansprüche,
**dadurch gekennzeichnet,**
**dass** das Polyamin ein zahlenmittleres Molekulargewicht Mₙ von mindestens 500 g/mol besitzt.

14. Mehrschichtverbund gemäß einem der vorhergehenden Ansprüche,
**dadurch gekennzeichnet,**
**dass** das Polyamin ein zahlenmittleres Molekulargewicht Mₙ von mindestens 800 g/mol besitzt.

15. Mehrschichtverbund gemäß einem der vorhergehenden Ansprüche,
**dadurch gekennzeichnet,**
**dass** die Aminogruppenkonzentration des Polyamin-Polyamid-Copolymers im Bereich von 100 bis 2 500 mmol/kg liegt.

16. Mehrschichtverbund gemäß einem der vorhergehenden Ansprüche,
**dadurch gekennzeichnet,**
**dass** die Formmasse der Schicht I Blockcopolymere enthält, die aus den Komponenten gemäß a) und c) gebildet wurden.

17. Mehrschichtverbund gemäß einem der vorhergehenden Ansprüche,
**dadurch gekennzeichnet,**
**dass** er mindestens eine Schicht II aus einer Formmasse auf Basis von PA11, PA12, PA612, PA1012 und/oder PA1212 enthält.

18. Mehrschichtverbund gemäß einem der vorhergehenden Ansprüche,
**dadurch gekennzeichnet,**
**dass** er mindestens eine Schicht III aus einer Formmasse auf Basis von PA6, PA66 und/oder PA6/66 enthält.

19. Mehrschichtverbund gemäß Anspruch 18,
**dadurch gekennzeichnet,**
**dass** er die Schichtenabfolge I/III besitzt.

20. Mehrschichtverbund gemäß einem der Ansprüche 17 und 18,
**dadurch gekennzeichnet,**
**dass** er die Schichtenabfolge II/I/III besitzt.

21. Mehrschichtverbund gemäß einem der Ansprüche 17 und 18,
**dadurch gekennzeichnet,**
**dass** er symmetrisch aufgebaut ist und entweder die Schichtenfolge II/I/II oder die Schichtenfolge II/I/III/I/II aufweist.

22. Mehrschichtverbund gemäß einem der vorhergehenden Ansprüche,
**dadurch gekennzeichnet,**
**dass** er zusätzlich eine Regeneratschicht enthält.

23. Mehrschichtverbund gemäß einem der vorhergehenden Ansprüche,
**dadurch gekennzeichnet,**
**dass** die einzelnen Formmassen jeweils maximal 50 Gew.-% Zusatzstoffe enthalten.

24. Mehrschichtverbund gemäß einem der Ansprüche 16 bis 22,
**dadurch gekennzeichnet,**
**dass** die Schicht II die Außenschicht darstellt.

25. Mehrschichtverbund gemäß einem der vorhergehenden Ansprüche,
**dadurch gekennzeichnet,**
**dass** eine der Schichten elektrisch leitfähig eingestellt ist.

26. Mehrschichtverbund gemäß einem der Ansprüche 1 bis 24,
**dadurch gekennzeichnet,**
**dass** sich an die innerste Schicht noch eine zusätzliche, elektrisch leitfähige Schicht anschließt.

27. Mehrschichtverbund gemäß einem der vorhergehenden Ansprüche,
**dadurch gekennzeichnet,**
**dass** er ein Rohr ist.

28. Mehrschichtverbund gemäß Anspruch 27,
**dadurch gekennzeichnet,**
**dass** er vollständig oder in Teilbereichen gewellt ist.

29. Mehrschichtverbund gemäß einem der Ansprüche 1 bis 26,
**dadurch gekennzeichnet,**
**dass** er ein Hohlkörper ist.

30. Mehrschichtverbund gemäß einem der vorhergehenden Ansprüche,
**dadurch gekennzeichnet,**
**dass** sich an die äußerste Schicht noch eine Elastomerschicht anschließt.

31. Mehrschichtverbund gemäß einem der Ansprüche 1 bis 28 sowie 30,
**dadurch gekennzeichnet,**
**dass** er eine Kraftstoffleitung, eine Bremsflüssigkeitsleitung, eine Kühlflüssigkeitsleitung, eine Hydraulikflüssigkeitsleitung, eine Tankstellenleitung, eine Klimaanlagenleitung oder eine Vapor Line ist.

32. Mehrschichtverbund gemäß einem der Ansprüche 29 und 30,
**dadurch gekennzeichnet,**
**dass** er ein Behälter, insbesondere ein Kraftstoffbehälter, oder ein Einfüllstutzen, insbesondere ein Tankeinfüllstutzen ist.

33. Mehrschichtverbund gemäß einem der Ansprüche 1 bis 24,
**dadurch gekennzeichnet,**
**dass** er eine Folie ist.

34. Mehrschichtverbund gemäß einem der vorhergehenden Ansprüche,
**dadurch gekennzeichnet,**
**dass** er mittels Mehrkomponentenspritzguss, Coextrusion oder Coextrusionsblasformen hergestellt wird.

35. Verwendung einer Formmasse, die folgende Komponenten enthält:
a) 0 bis 80 Gew.-Teile eines Polyamids, ausgewählt aus PA 6, PA66, PA6/66 und Mischungen hiervon,
c) 0 bis 80 Gew.-Teile eines Polyamids, ausgewählt aus PA11, PA12, PA612, PA1012, PA1212 und Mischungen hiervon,
wobei die Summe der Gewichtsteile der Komponenten gemäß a), c) und gegebenenfalls b) 100 beträgt, als Haftvermittlerschicht in einem Mehrschichtverbund, wobei die haftvermittelnde Wirkung erzeugt wird durch eine Maßnahme, ausgewählt aus der Gruppe
A. Gleichzeitige Anwesenheit der folgenden Komponente:
b) 0,5 bis 100 Gew.-Teile eines Polyamin-Polyamid-Copolymers, das unter Verwendung folgender Monomerer hergestellt wird:
α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
β) polyamidbildende Monomere, ausgewählt aus Lactamen, ω-Aminocarbonsäuren und/oder äquimolaren Kombinationen von Diamin und Dicarbonsäure;
B. Verknüpfung der Komponenten gemäß a) und c) durch Zugabe einer reaktiven Verbindung;
C. Mischen der Komponenten zu einem Polyamidblend und Festphasennachkondensation des erhaltenen Polyamidblends;
wobei zusätzlich
- in der Summe der Komponenten a) und gegebenenfalls b) mindestens 20 Gew.-Teile aus Monomereinheiten bestehen, die sich von Caprolactam und/oder der Kombination Hexamethylendiamin/Adipinsäure herleiten und
- in der Summe der Komponenten c) und gegebenenfalls b) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten.

## Claims

1. Composite having two or more layers and comprising the following layer:
I. a layer I made from a moulding composition which comprises the following components:
a) from 0 to 80 parts by weight of a polyamide selected from PA6, PA66, PA6/66 and mixtures of these,
c) from 0 to 80 parts by weight of a polyamide selected from PA11, PA12, PA612, PA1012, PA1212 and mixtures of these,
**characterized in that** the adhesion of this layer is improved via a measure selected from the group of
A. simultaneous presence of the following component:
b) from 0.5 to 100 parts by weight of a polyamine-polyamide copolymer prepared using the following monomers:
α) from 0.5 to 25% by weight, based on the polyamine-polyamide copolymer, of a polyamine having at least 4 nitrogen atoms and having a number-average molar mass Mₙ of at least 146 g/mol, and
β) polyamide-forming monomers selected from lactams, ω-aminocarboxylic acids, and/or equimolar combinations of diamine and dicarboxylic acid, and
B. linking of components a) and c) by adding a reactive compound,
where the total of the parts by weight of components a), c) and if appropriate b) is 100, and where in addition
- within the entirety of components a) and b), at least 20 parts by weight are composed of monomer units which derive from caprolactam and/or from the combination hexamethylenediamine/adipic acid, and
- within the entirety of components b) and c), at least 20 parts by weight are composed of monomer units which derive from ω-aminoundecanoic acid, laurolactam, the combination hexamethylenediamine/1,12-dodecanedioic acid, the combination 1,10-decanediamine/1,12-dodecanedioic acid, and/or the combination 1,12-dodecanediamine/1,12-dodecanedioic acid.

2. Composite having two or more layers, according to Claim 1,
**characterized in that**
the moulding composition of layer I comprises:
- at least 0.5 part by weight of component a)
and/or
- at least 0.5 part by weight of component c).

3. Composite having two or more layers, according to any of the preceding claims,
**characterized in that**
the moulding composition of layer I comprises:
- at least 10 parts by weight of component a)
and/or
- at least 2 parts by weight of component b)
and/or
- at least 10 parts by weight of component c).

4. Composite having two or more layers, according to any of the preceding claims,
**characterized in that**
the moulding composition of layer I comprises:
- at least 20 parts by weight of component a)
and/or
- at least 5 parts by weight of component b)
and/or
- at least 20 parts by weight of component c).

5. Composite having two or more layers, according to any of the preceding claims,
**characterized in that**
the moulding composition of layer I comprises:
- at least 30 parts by weight of component a)
and/or
- at least 10 parts by weight of component b)
and/or
- at least 30 parts by weight of component c).

6. Composite having two or more layers, according to any of the preceding claims,
**characterized in that**
the moulding composition of layer I comprises:
- at most 70 parts by weight of component a)
or
- at most 80 parts by weight of component b)
or
- at most 70 parts by weight of component c).

7. Composite having two or more layers, according to any of the preceding claims,
**characterized in that**
the moulding composition of layer I comprises:
- at most 60 parts by weight of component a)
or
- at most 60 parts by weight of component b)
or
- at most 60 parts by weight of component c).

8. Composite having two or more layers, according to any of the preceding claims,
**characterized in that**
the moulding composition of layer I has not more than 40 parts by weight of component b).

9. Composite having two or more layers, according to any of the preceding claims,
**characterized in that**
the polyamine-polyamide copolymer is prepared using from 1 to 20% by weight of the polyamine.

10. Composite having two or more layers, according to any of the preceding claims,
**characterized in that**
the polyamine-polyamide copolymer is prepared using from 1.5 to 16% by weight of the polyamine.

11. Composite having two or more layers, according to any of the preceding claims,
**characterized in that**
the polyamine contains at least 8 nitrogen atoms.

12. Composite having two or more layers, according to any of the preceding claims,
**characterized in that**
the polyamine contains at least 11 nitrogen atoms.

13. Composite having two or more layers, according to any of the preceding claims,
**characterized in that**
the polyamine has a number-average molar mass Mₙ of at least 500 g/mol.

14. Composite having two or more layers, according to any of the preceding claims,
**characterized in that**
the polyamine has a number-average molar mass Mₙ of at least 800 g/mol.

15. Composite having two or more layers, according to any of the preceding claims,
**characterized in that**
the amino group concentration in the polyamine-polyamide copolymer is in the range from 100 to 2 500 mmol/kg.

16. Composite having two or more layers, according to any of the preceding claims,
**characterized in that**
the moulding composition of layer I comprises block copolymers which have been formed from components a) and c).

17. Composite having two or more layers, according to any of the preceding claims,
**characterized in that**
the composite comprises at least one layer II made from a moulding composition based on PA11, PA12, PA612, PA1012, and/or PA1212.

18. Composite having two or more layers, according to any of the preceding claims,
**characterized in that**
the composite comprises at least one layer III made from a moulding composition based on PA6, PA66, and/or PA6/66.

19. Composite having two or more layers, according to Claim 18,
**characterized in that**
the composite has the layer sequence I/III.

20. Composite having two or more layers, according to Claim 17 or 18,
**characterized in that**
the composite has the layer sequence II/I/III.

21. Composite having two or more layers, according to Claim 17 or 18,
**characterized in that**
the composite has a symmetrical structure and either has the layer sequence II/I/II or has the layer sequence II/I/III/I/II.

22. Composite having two or more layers, according to any of the preceding claims,
**characterized in that**
the composite also comprises a regrind layer.

23. Composite having two or more layers, according to any of the preceding claims,
**characterized in that**
each of the moulding compositions comprises not more than 50% by weight of additives.

24. Composite having two or more layers, according to any of Claims 16 to 22,
**characterized in that**
the layer II is the outer layer.

25. Composite having two or more layers, according to any of the preceding claims,
**characterized in that**
one of the layers has been rendered electrically conductive.

26. Composite having two or more layers, according to any of Claims 1 to 24,
**characterized in that**
there is also an additional, electrically conductive layer adjacent to the innermost layer.

27. Composite having two or more layers, according to any of the preceding claims,
**characterized in that**
the composite is a tube.

28. Composite having two or more layers, according to Claim 27,
**characterized in that**
some regions, or all, of the composite are corrugated.

29. Composite having two or more layers, according to any of Claims 1 to 26,
**characterized in that**
the composite is a hollow article.

30. Composite having two or more layers, according to any of the preceding claims,
**characterized in that**
there is also an elastomer layer adjacent to the outermost layer.

31. Composite having two or more layers, according to any of Claims 1 to 28 and 30,
**characterized in that**
the composite is fuel piping, brake-fluid piping, coolant piping, hydraulic-fluid piping, fuel-pump piping, air-conditioner piping, or a vapour line.

32. Composite having two or more layers, according to either Claim 29 or Claim 30,
**characterized in that**
the composite is a container, in particular a fuel container, or a filler pipe, in particular a filler pipe for a tank.

33. Composite having two or more layers, according to any of Claims 1 to 24,
**characterized in that**
the composite is a film.

34. Composite having two or more layers, according to any of the preceding claims,
**characterized in that**
the composite is produced by multicomponent injection moulding, coextrusion or coextrusion blow moulding.

35. Use of a moulding composition which comprises the following components:
a) from 0 to 80 parts by weight of a polyamide selected from PA6, PA66, PA6/66 and mixtures of these,
c) from 0 to 80 parts by weight of a polyamide selected from PA11, PA12, PA612, PA1012, PA1212 and mixtures of these,
where the total of the parts by weight of components a), c) and if appropriate b) is 100, as adhesion-promoter layer in a composite having two or more layers, where the adhesion-promoting effect is produced via a measure selected from the group of
A. simultaneous presence of the following component:
b) from 0.5 to 100 parts by weight of a polyamine-polyamide copolymer prepared using the following monomers:
α) from 0.5 to 25% by weight, based on the polyamine-polyamide copolymer, of a polyamine having at least 4 nitrogen atoms and having a number-average molar mass Mₙ of at least 146 g/mol, and
β) polyamide-forming monomers selected from lactams, ω-aminocarboxylic acids, and/or equimolar combinations of diamine and dicarboxylic acid;
B. linking of components a) and c) by adding a reactive compound;
C. mixing the components to give a polyamide blend and solid-phase post-condensation of the resultant polyamide blend;
where in addition
- within the entirety of components a) and if appropriate b), at least 20 parts by weight are composed of monomer units which derive from caprolactam and/or from the combination hexamethylenediamine/adipic acid, and
- within the entirety of components c) and if appropriate b), at least 20 parts by weight are composed of monomer units which derive from ω-aminoundecanoic acid, laurolactam, the combination hexamethylenediamine/1,12-dodecanedioic acid, the combination 1,10-decanediamine/1,12-dodecanedioic acid, and/or the combination 1,12-dodecanediamine/1,12-dodecanedioic acid.

## Revendications

1. Assemblage à plusieurs couches qui contient la couche suivante :
I. une couche I constituée par une masse de moulage qui contient les composants suivants :
a) 0 à 80 parties en poids d'un polyamide choisi parmi le PA6, le PA66, le PA6/66 et les mélanges de ceux-ci
c) 0 à 80 parties en poids d'un polyamide choisi parmi le PA11, le PA12, le PA612, le PA1012, le PA1212 et les mélanges de ceux-ci
**caractérisé en ce que** l'adhérence de cette couche est améliorée par une mesure qui est choisie dans le groupe formé par
A. une présence simultanée des composants suivants :
b) 0,5 à 100 parties en poids d'un copolymère de polyamine-polyamide qui est préparé en utilisant les monomères suivants :
α) 0,5 à 25% en poids, par rapport au copolymère de polyamine-polyamide, d'une polyamine comprenant au moins 4 atomes d'azote et présentent un poids moléculaire numérique moyen Mₙ d'au moins 146 g/mole ainsi que
β) des monomères formant du polyamide, choisis parmi les lactames, les acides ω-aminocarboxyliques et/ou les combinaisons équimolaires de diamine et d'acide dicarboxylique, et
B. liaison des composés selon a) et c) par addition d'un composé réactif,
la somme des parties en poids des composants selon a), c) et le cas échéant b) étant égale à 100 et, en outre
- dans la somme des composants a) et b), au moins 20 parties en poids étant constituées par des unités monomères qui sont dérivées du caprolactame et/ou de la combinaison hexaméthylènediamine/acide adipique et
- dans la somme des composants b) et c) au moins 20 parties en poids étant constituées par des unités monomères qui sont dérivées de l'acide ω-aminoundécanoïque, du lactame de l'acide laurique, de la combinaison hexaméthylènediamine/acide 1,12-dodécanedioïque, de la combinaison 1,10-décanediamine/acide 1,12-dodécanedioïque et/ou de la combinaison 1,12-dodécanediamine/acide 1,12-dodécanedioïque.

2. Assemblage à plusieurs couches selon la revendication 1, **caractérisé en ce que** la masse de moulage de la couche I contient :
- au moins 0,5 partie en poids du composant selon a)
et/ou
- au moins 0,5 partie en poids du composant selon c).

3. Assemblage à plusieurs couches selon l'une quelconque des revendications précédentes, **caractérisé en ce que** la masse de moulage de la couche I contient :
- au moins 10 parties en poids du composant selon a)
et/ou
- au moins 2 parties en poids du composant selon b)
et/ou
- au moins 10 parties en poids du composant selon c).

4. Assemblage à plusieurs couches selon l'une quelconque des revendications précédentes, **caractérisé en ce que** la masse de moulage de la couche I contient :
- au moins 20 parties en poids du composant selon a)
et/ou
- au moins 5 parties en poids du composant selon b)
et/ou
- au moins 20 parties en poids du composant selon c).

5. Assemblage à plusieurs couches selon l'une quelconque des revendications précédentes, **caractérisé en ce que** la masse de moulage de la couche I contient :
- au moins 30 parties en poids du composant selon a)
et/ou
- au moins 10 parties en poids du composant selon b)
et/ou
- au moins 30 parties en poids du composant selon c).

6. Assemblage à plusieurs couches selon l'une quelconque des revendications précédentes, **caractérisé en ce que** la masse de moulage de la couche I contient :
- au maximum 70 parties en poids du composant selon a) ou
- au maximum 80 parties en poids du composant selon b) ou
- au maximum 70 parties en poids du composant selon c).

7. Assemblage à plusieurs couches selon l'une quelconque des revendications précédentes, **caractérisé en ce que** la masse de moulage de la couche I contient :
- au maximum 60 parties en poids du composant selon a) ou
- au maximum 60 parties en poids du composant selon b) ou
- au maximum 60 parties en poids du composant selon c).

8. Assemblage à plusieurs couches selon l'une quelconque des revendications précédentes, **caractérisé en ce que** la masse de moulage de la couche I contient au maximum 40 parties en poids du composant selon b).

9. Assemblage à plusieurs couches selon l'une quelconque des revendications précédentes, **caractérisé en ce que** le copolymère de polyamine-polyamide est préparé avec utilisation de 1 à 20% en poids de la polyamine.

10. Assemblage à plusieurs couches selon l'une quelconque des revendications précédentes, **caractérisé en ce que** le copolymère de polyamine-polyamide est préparé avec utilisation de 1,5 à 16% en poids de la polyamine.

11. Assemblage à plusieurs couches selon l'une quelconque des revendications précédentes, **caractérisé en ce que** la polyamine contient au moins 8 atomes d'azote.

12. Assemblage à plusieurs couches selon l'une quelconque des revendications précédentes, **caractérisé en ce que** la polyamine contient au moins 11 atomes d'azote.

13. Assemblage à plusieurs couches selon l'une quelconque des revendications précédentes, **caractérisé en ce que** la polyamine présente un poids moléculaire numérique moyen Mₙ d'au moins 500 g/mole.

14. Assemblage à plusieurs couches selon l'une quelconque des revendications précédentes, **caractérisé en ce que** la polyamine présente un poids moléculaire numérique moyen Mₙ d'au moins 800 g/mole.

15. Assemblage à plusieurs couches selon l'une quelconque des revendications précédentes, **caractérisé en ce que** la concentration en groupes amino du copolymère de polyamine-polyamide se situe dans la plage de 100 à 2 500 mmoles/kg.

16. Assemblage à plusieurs couches selon l'une quelconque des revendications précédentes, **caractérisé en ce que** la masse de moulage de la couche I contient des copolymères à blocs qui sont formés à partir des composants selon a) et c).

17. Assemblage à plusieurs couches selon l'une quelconque des revendications précédentes, **caractérisé en ce qu'**il contient au moins une couche II constituée par une masse de moulage à base de PA11, PA12, PA612, PA1012 et/ou PA1212.

18. Assemblage à plusieurs couches selon l'une quelconque des revendications précédentes, **caractérisé en ce qu'**il contient au moins une couche III constituée par une masse de moulage à base de PA6, PA66 et/ou PA6/66.

19. Assemblage à plusieurs couches selon la revendication 18, **caractérisé en ce qu'**il présente l'ordre de couches I/III.

20. Assemblage à plusieurs couches selon l'une quelconque des revendications 17 et 18, **caractérisé en ce qu'**il présente l'ordre de couches II/I/III.

21. Assemblage à plusieurs couches selon l'une quelconque des revendications 17 et 18, **caractérisé en ce qu'**il présente une structure symétrique et qu'il présente l'ordre de couches II/I/II ou l'ordre de couches II/I/III/I/II.

22. Assemblage à plusieurs couches selon l'une quelconque des revendications précédentes, **caractérisé en ce qu'**il contient en outre une couche de produit recyclé.

23. Assemblage à plusieurs couches selon l'une quelconque des revendications précédentes, **caractérisé en ce que** les différentes masses de moulage contiennent à chaque fois au maximum 50% en poids d'additifs.

24. Assemblage à plusieurs couches selon l'une quelconque des revendications 16 à 22, **caractérisé en ce que** la couche II représente la couche extérieure.

25. Assemblage à plusieurs couches selon l'une quelconque des revendications précédentes, **caractérisé en ce qu'**une des couches est réglée de manière électriquement conductrice.

26. Assemblage à plusieurs couches selon l'une quelconque des revendications 1 à 24, **caractérisé en ce que** la couche la plus interne est encore suivie d'une couche supplémentaire, électriquement conductrice.

27. Assemblage à plusieurs couches selon l'une quelconque des revendications précédentes, **caractérisé en ce qu'**il s'agit d'un tuyau.

28. Assemblage à plusieurs couches selon la revendication 27, **caractérisé en ce qu'**il est complètement strié ou strié dans des zones partielles.

29. Assemblage à plusieurs couches selon l'une quelconque des revendications 1 à 26, **caractérisé en ce qu'**il s'agit d'un corps creux.

30. Assemblage à plusieurs couches selon l'une quelconque des revendications précédentes, **caractérisé en ce que** la couche la plus externe est encore suivie d'une couche en élastomère.

31. Assemblage à plusieurs couches selon l'une quelconque des revendications 1 à 28 ainsi que 30, **caractérisé en ce qu'**il s'agit d'une conduite pour carburant, d'une conduite pour liquide de frein, d'une conduite pour liquide de refroidissement, d'une conduite pour liquide hydraulique, d'une conduite pour station-service, d'une conduite pour climatisation ou d'une canalisation à vapeur.

32. Assemblage à plusieurs couches selon l'une quelconque des revendications 29 et 30, **caractérisé en ce qu'**il s'agit d'un réservoir, en particulier d'un réservoir pour carburant ou d'une tubulure de remplissage, en particulier une tubulure de remplissage de citerne.

33. Assemblage à plusieurs couches selon l'une quelconque des revendications 1 à 24, **caractérisé en ce qu'**il s'agit d'une feuille.

34. Assemblage à plusieurs couches selon l'une quelconque des revendications précédentes, **caractérisé en ce qu'**il est réalisé par moulage par injection à plusieurs composants, par coextrusion ou par moulage par soufflage et coextrusion.

35. Utilisation d'une masse de moulage qui contient les composants suivants :
a) 0 à 80 parties en poids d'un polyamide choisi parmi le PA6, le PA66, le PA6/66 et les mélanges de ceux-ci
c) 0 à 80 parties en poids d'un polyamide choisi parmi le PA11, le PA12, le PA612, le PA1012, le PA1212 et les mélanges de ceux-ci
la somme des parties en poids des composants selon a), c) et le cas échéant b) étant égale à 100,
comme couche de type promoteur d'adhérence dans un assemblage à plusieurs couches, l'effet promoteur d'adhérence étant produit par une mesure choisie dans le groupe formé par
A. une présence simultanée des composants suivants :
b) 0,5 à 100 parties en poids d'un copolymère de polyamine-polyamide qui est préparé en utilisant les monomères suivants :
α) 0,5 à 25% en poids, par rapport au copolymère de polyamine-polyamide, d'une polyamine comprenant au moins 4 atomes d'azote et présentent un poids moléculaire numérique moyen Mₙ d'au moins 146 g/mole ainsi que
β) des monomères formant du polyamide, choisis parmi les lactames, les acides ω-aminocarboxyliques et/ou les combinaisons équimolaires de diamine et d'acide dicarboxylique ;
B. liaison des composés selon a) et c) par addition d'un composé réactif ;
C. mélange des composants en un mélange de polyamides et post-condensation en phase solide du mélange de polyamides obtenu ;
où, en outre
- dans la somme des composants a) et le cas échéant b), au moins 20 parties en poids sont constituées par des unités monomères qui sont dérivées du caprolactame et/ou de la combinaison hexaméthylènediamine/acide adipique et
- dans la somme des composants c) et le cas échéant b) au moins 20 parties en poids sont constituées par des unités monomères qui sont dérivées de l'acide ω-aminoundécanoïque, du lactame de l'acide laurique, de la combinaison hexaméthylènediamine/acide 1,12-dodécanedioïque, de la combinaison 1,10-décanediamine/acide 1,12-dodécanedioïque et/ou de la combinaison 1,12-dodécanediamine/acide 1,12-dodécanedioïque.
